# EUROPEAN PATENT APPLICATION

(11) **EP 4 694 237 A1**
(43) Date of publication of application: **11.02.2026**
(21) Application number: 23929270.9
(22) Date of filing: 29.03.2023
(51) Int. Cl.: H04W 8/14, H04W 4/50

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Penza, Giancarlo
(86) International application number: PCT/CN2023/084892
(87) International publication number: WO 2024/197672

(57) **Abstract**

Provided are communication methods and devices. The communication method includes: a first network element sends an application function (AF) request, the AF request carrying at least one of the following: user plane information of the first network element; data network access identifier (DNAI) information of the first network element; information of a terminal device; and user plane session information corresponding to a user plane perception/positioning service. According to the present disclosure, a user plane path can be selected, thereby saving network resources.

## Description

### TECHNICAL FIELD

The present disclosure relates to the field of communications, and particularly to a communication method and device.

### BACKGROUND

A wireless electromagnetic wave signal used in a cellular network has an environmental sensing capability, so that the sensing capability can be supported in a communication network. For example, a sensing function network element may be used for achieving sensing. It is necessary to support reporting of positioning/sensing data of a user plane in a sensing or positioning process. In related art, the inability to select an optimal user plane path may lead to the failure in meeting the latency requirements for delay-sensitive services, or cause a large amount of data to be routed over a longer path within the network, thereby wasting network resources.

### SUMMARY

Embodiments of the present disclosure provide a plurality of communication methods and devices, which can realize the selection of a user plane path, to save network resources.

There is provided a communication method in an embodiment of the present disclosure, the communication method includes the following operation.

A first network element transmits an application function (AF) request, the AF request carrying at least one of:
user plane information of the first network element;
data network access identifier (DNAI) information associated with the first network element;
information of a terminal device; and
user plane session information corresponding to a user plane sensing/positioning service.

There is also provided a communication method in an embodiment of the present disclosure, the communication method includes the following operation.

A second network element receives an AF request, the AF request carrying at least one of:
user plane information of a first network element;
DNAI information associated with the first network element;
information of a terminal device; and
user plane session information corresponding to a user plane sensing/positioning service.

There is also provided a communication method in an embodiment of the present disclosure, the communication method includes the following operation.

A third network element receives an AF request, the AF request carrying at least one of:
user plane information of a first network element;
DNAI information associated with the first network element;
information of a terminal device; and
user plane session information corresponding to a user plane sensing/positioning service.

There is also provided a communication method in an embodiment of the present disclosure, the communication method includes the following operation.

A fourth network element transmits a request message, the request message carrying at least one of:
user plane information of a first network element;
DNAI information associated with the first network element;
session identification information;
identification information of a terminal device;
location information of the terminal device; and
local offloading indication information.

There is also provided a communication method in an embodiment of the present disclosure, the communication method includes the following operation.

A fifth network element receives a request message, the request message carrying at least one of:
user plane information of a first network element;
DNAI information associated with the first network element;
session identification information;
identification information of a terminal device;
location information of the terminal device; and
local offloading indication information.

There is also provided a second network element in an embodiment of the present disclosure, the second network element includes a first transmission module.

The first transmission module is configured to transmit an AF request, the AF request carrying at least one of:
user plane information of the first network element;
DNAI information associated with the first network element;
information of a terminal device; and
user plane session information corresponding to a user plane sensing/positioning service.

There is also provided a second network element in an embodiment of the present disclosure, the second network element includes a first reception module.

The first reception module is configured to receive an AF request, the AF request carrying at least one of:
user plane information of a first network element;
DNAI information associated with the first network element;
information of a terminal device; and
user plane session information corresponding to a user plane sensing/positioning service.

There is also provided a third network element in an embodiment of the present disclosure, the third network element includes a second reception module.

The second reception module is configured to receive an AF request, the AF request carrying at least one of:
user plane information of a first network element;
DNAI information associated with the first network element;
information of a terminal device; and
user plane session information corresponding to a user plane sensing/positioning service.

There is also provided a fourth network element in an embodiment of the present disclosure, the fourth network element includes a fourth transmission module.

The fourth transmission module is configured to transmit a request message, the request message carrying at least one of:
user plane information of a first network element;
DNAI information associated with the first network element;
session identification information;
identification information of a terminal device;
location information of the terminal device; and
local offloading indication information.

There is also provided a fifth network element in an embodiment of the present disclosure, the fifth network element includes a fourth reception module.

The fourth reception module is configured to receive a request message, the request message carrying at least one of:
user plane information of a first network element;
DNAI information associated with the first network element;
session identification information;
identification information of a terminal device;
location information of the terminal device; and
local offloading indication information.

There is also provided a communication device in an embodiment of the present disclosure, the communication device includes a processor, a memory and a transceiver. The memory is configured to store a computer program, and the processor is configured to call and run the computer program stored in the memory and control the transceiver to perform the above mentioned methods.

There is also provided a chip in an embodiment of the present disclosure, the chip is configured to perform the above mentioned methods.

Specifically, the chip includes a processor, and the processor is configured to call and run a computer program stored in a memory to cause a device mounted with the chip to perform the above mentioned methods.

There is provided a computer-readable storage medium in an embodiment of the present disclosure, the computer-readable storage medium has stored a computer program. The computer program, when run by a device, causes the device to implement the above mentioned methods.

There is provided a computer program product in an embodiment of the present disclosure, the computer program product includes computer program instructions. The computer program instructions are run by a computer to implement the above mentioned methods.

There is provided a computer program in an embodiment of the present disclosure, the computer program, when run on a computer, causes the computer to implement the above mentioned methods.

According to the embodiments of the present disclosure, the first network element transmits the AF request, which can realize the selection of a user plane path, thereby saving the network resources.

### BRIEF DESCRIPTION OF THE DRAWINGS

FIG. 1 is a schematic diagram of an application scenario in an embodiment of the present disclosure.
FIG. 2 exemplarily illustrates a diagram of the architecture of a 5th-generation (5G) network system.
FIG. 3A is a schematic flowchart of a connection establishment triggered by a location management function (LMF) for user plane positioning.
FIG. 3B is a schematic flowchart of a connection establishment triggered by user equipment (UE) for user plane positioning.
FIG. 4 is a schematic flowchart of a communication method 400 according to an embodiment of the present disclosure.
FIG. 5 is an implementation flowchart for local offloading of user plane data of UE according to an embodiment of the present disclosure.
FIG. 6 is another implementation flowchart for local offloading of user plane data of UE according to an embodiment of the present disclosure.
FIG. 7 is a schematic flowchart of a communication method 700 according to an embodiment of the present disclosure.
FIG. 8 is a schematic flowchart of a communication method 800 according to an embodiment of the present disclosure.
FIG. 9 is a schematic flowchart of a communication method 900 according to an embodiment of the present disclosure.
FIG. 10 is another implementation flowchart for local offloading of user plane data of UE according to an embodiment of the present disclosure.
FIG. 11 is a schematic flowchart of a communication method 1100 according to an embodiment of the present disclosure.
FIG. 12 is a schematic structural diagram of a first network element 1200 according to an embodiment of the present disclosure.
FIG. 13 is a schematic structural diagram of a second network element 1300 according to an embodiment of the present disclosure.
FIG. 14 is a schematic structural diagram of a second network element 1400 according to an embodiment of the present disclosure.
FIG. 15 is a schematic structural diagram of a third network element 1500 according to an embodiment of the present disclosure.
FIG. 16 is a schematic structural diagram of a third network element 1600 according to an embodiment of the present disclosure.
FIG. 17 is a schematic structural diagram of a fourth network element 1700 according to an embodiment of the present disclosure.
FIG. 18 is a schematic structural diagram of a fourth network element 1800 according to an embodiment of the present disclosure.
FIG. 19 is a schematic structural diagram of a fifth network element 1900 according to an embodiment of the present disclosure.
FIG. 20 is a schematic structural diagram of a fifth network element 2000 according to an embodiment of the present disclosure.
FIG. 21 is a schematic structural diagram of a communication device 2100 according to an embodiment of the present disclosure.
FIG. 22 is a schematic structural diagram of a chip 2200 according to an embodiment of the present disclosure.

### DETAILED DESCRIPTION

The solution in the embodiments of the present disclosure will be described with reference to the accompanying drawings of the embodiments of the present disclosure.

**It** should be noted that the terms, in the embodiments of the description and claims and the above drawings, such as "first", "second", etc., are used for distinguishing similar objects, and are not required to be used for describing a specific order or precedence. In addition, the objects described by "first" and "second" may be the same or different.

The technical solution in the embodiments of the present disclosure may be applied to various communication systems, such as: a global system of mobile communication (GSM) system, a code division multiple access (CDMA) system, a wideband division multiple access (WCDMA) system, a general packet radio service (GPRS), a long term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (WiFi), a 5th-generation (5G) system, a beyond 5^{th}-generation (B5G) system or other communication systems, etc.

Generally, the number of connections supported by a traditional communication system is limited and the connections are easy to be implemented. However, with the development of the communication technology, mobile communication systems will not only support traditional communications, but also support, for example, a device to device (D2D) communication, a machine to machine (M2M) communication, a machine type communication (MTC), a vehicle to vehicle (V2V) communication, or the V2X communication, etc. Embodiments of the present disclosure may also be applied to these communication systems.

In an implementation, the communication system in the embodiments of the present disclosure may be applied to a carrier aggregation (CA) scenario, a dual connectivity (DC) scenario, and a standalone (SA) network distribution scenario.

In an implementation, the communication system in the embodiments of the present disclosure may be applied to an unlicensed spectrum. The unlicensed spectrum may be considered as a shared spectrum. Alternatively, the communication system in the embodiments of the present disclosure may also be applied to a licensed spectrum. The licensed spectrum may be considered as an unshared spectrum.

Various embodiments are described in combination with a network device and a terminal device in the embodiments of the present disclosure. The terminal device may be called UE, an access terminal, a subscriber unit, a subscriber station, a mobile station, a mobile console, a remote station, a remote terminal, a mobile device, a user terminal, a terminal, a wireless communication device, a user agent, or user apparatus.

The terminal device may be a station (ST) in the WLAN, and may be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, an on-board device, a wearable device, a terminal device in a next generation communication system such as an NR network, or a terminal device in a future evolved public land mobile network (PLMN), or the like.

In the embodiments of the present disclosure, the terminal device may be deployed on land, including indoors or outdoors, hand-held, wearable or vehicle-mounted; or may be deployed on the water (such as ships); or may also be deployed in the air (such as airplanes, balloons and satellites).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example but not limitation, in the embodiments of the present disclosure, the terminal device may be a wearable device. The wearable device may be referred to as a wearable smart device, which is a general name of wearable devices developed by applying wearable technology and intelligently designing daily wear, such as glasses, gloves, watches, clothing and shoes. The wearable device is a portable device that is worn directly on the body or integrated into clothes or accessories of a user. The wearable device is not only a hardware device, but also may realize powerful functions through software support, data interaction and cloud interaction. The generalized wearable smart device may have comprehensive functions, a large size and a function of realizing whole or partial functions without relying on a smart phone, such as a smart watch or smart glasses; and may only focus on certain application functions and need to be used in conjunction with another device like a smart phone, such as various smart bracelets and smart jewelry for monitoring vital signs.

In the embodiments of the present disclosure, the network device may be a device for communicating with a mobile device. The network device may be an access point (AP) in the WLAN, a base transceiver station (BTS) in the GSM or CDMA, a base station NodeB (NB) in the WCDMA, an Evolved Node B (eNB or eNodeB) in the LTE, or a relay station or an AP, or a vehicle-mounted device, a wearable device, a network device (gNB) in an NR network, or a network device in a future evolved PLMN network or a network device in an NTN network, etc.

By way of example and not limitation, in the embodiments of the present disclosure, the network device may have a mobility characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In the embodiments of the present disclosure, the network device may provide services for a cell, and the terminal device may communicate with the network device through transmission resources (e.g. frequency-domain resources or called spectrum resources) used by the cell. The cell may be a cell corresponding to the network device such as a base station, and may belong to a macro base station or a base station corresponding to a small cell which may include: a metro cell, a micro cell, a pico cell, a femto cell, etc. These small cells have the characteristics of small coverage and low transmission power, and are suitable for providing high-speed data transmission services.

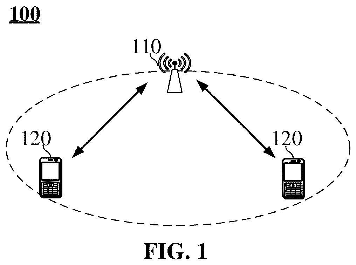

FIG. 1 exemplarily illustrates a communication system 100. The communication system includes a network device 110 and two terminal devices 120. In an implementation, the communication system 100 may include a plurality of network devices 110 and coverage of each network device 110 may include another number of terminal devices 120, which is not limited in the embodiments of the present disclosure.

**In** an implementation, the communication system 100 may further include other network entities such as a mobility management entity (MME), an access and mobility management function (AMF), which is not limited in the embodiments of the present disclosure.

The network device may include an access network device and a core network device. That is, the wireless communication system may further include a plurality of core networks for communicating with the access network device. The access network device may be an evolutional node B (abbreviated as eNB or e-NodeB), a macro base station, a micro base station (also referred to as a "small base station"), a pico base station, an access point (AP), a transmission point (TP), or a new generation node B (gNodeB) or the like in an LTE system, a next generation mobile communication (next radio, NR) system or an authorized auxiliary access long-term evolution (LAA-LTE) system.

**It** should be understood that, a device having a communication function in the network/system in embodiments of the present disclosure may be referred to as a communication device. Taking the communication system illustrated in FIG. 1 as an example, the communication device may include a network device and a terminal device which have communication functions. The network device and the terminal device may be specific devices in the embodiments of the present disclosure, and details are not elaborated herein again. The communication device may further include other devices in the communication system, such as a network controller, an mobile management entity (MME) or other network entities, which is not limited in the embodiments of the present disclosure.

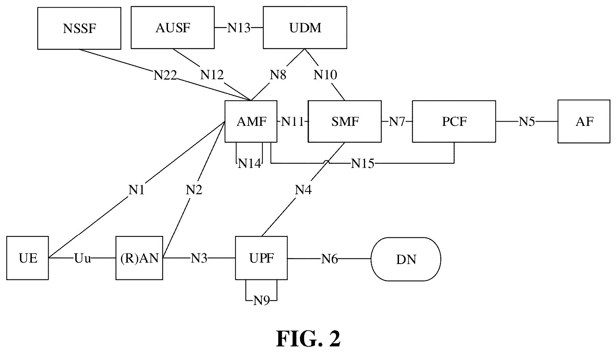

FIG. 2 exemplarily illustrates a diagram of the architecture of a 5G network system. UE may make an access stratum (AS) connection with an access network (AN) through a Uu interface, to exchange access stratum messages and perform wireless data transmission, and the UE may make a non-access stratum (NAS) connection with an AMF through an N1 interface to exchange NAS messages. The AMF is a mobility management function in a core network, and an SMF is a session management function in the core network. In addition to performing the mobility management for the UE, the AMF is also responsible for forwarding messages related to the session management between the UE and the SMF. A PCF is a policy management function in the core network, and the PCF is responsible for formulating policies related to the mobility management, the session management, the billing, etc. for UE. A UPF is a user plane function in the core network. The UPF may transmit data to an external data network through an N6 interface and transmit data to the AN through an N3 interface.

**It** should be understood that, terms "system" and "network" in the present disclosure are usually interchangeably used. The term "and/or" herein is only used to describe an association relationship between the associated objects, and represents that three relationships may exist. For example, A and/or B may represent three conditions: independent existence of A, existence of both A and B, and independent existence of B. In addition, the character "/" in the present disclosure usually represents that previous and next associated objects form an "or" relationship.

It should also be understood that the term "indicate" mentioned in embodiments of the present disclosure may be a direct indication or an indirect indication, and may also be indicative of a relationship. For example, A indicates B, which may represent that A directly indicates B, for example, B may be obtained through A; or that A indirectly indicates B, for example, A indicates C, and B may be obtained through C; or that there is an association between A and B.

The term "correspond" in the embodiments of the present disclosure may represent that two items have a direct or indirect corresponding relationship, or an associative relationship, or a relationship such as indicating and indicated, configuring and being configured, etc.

For convenience of understanding the technical solutions in the embodiments of the present disclosure, related technologies in embodiments of the present disclosure are described below. The following related technologies used as optional solutions may be combined with the technical solutions in the embodiments of the present disclosure in various ways. Such combinations fall within the scope of protection of the embodiments of the present disclosure.

Wireless electromagnetic wave signals used in cellular networks may not only be used for wireless data transmissions and communications, but also have an environmental sensing capability, such as user movement or gesture recognition, breathing monitoring, terminal moving speed measurement, environmental imaging, weather monitoring, etc. Therefore, it may be considered that the cellular networks are not only for communications and data transmissions, but also for acquisition of sensing information.

For example, in a B5G network, the sensing capability may be supported, and the sensing function may be supported in a 3GPP network by adding a sensing control network element (i.e., a sensing function (SF)) and corresponding processes. When an application transmits a sensing request for a target UE to a core network in the 3GPP network, the core network may select a correct access network device or auxiliary UE through the sensing control network element or an AMF, trigger a capability for performing sensing-related wireless measurement, and initiate measurement for sensing information and generate a sensing result.

The current architecture and process for sensing are similar to the architecture and process for positioning, which need to support reporting of positioning/sensing data of a user plane. That is, UE is informed of a user plane (UP) address of an LMF/SF that needs to be used, and establishes a session to realize a user plane connection and data transmission between the UE and the LMF/SF.

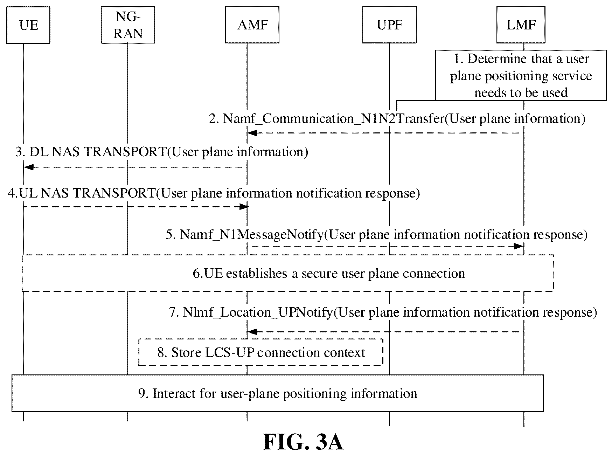

At present, there is no specific flow on how to configure a user plane connection between an SF and UE, but there are related solutions on how to configure a user-plane connection between an LMF and UE, details of which are illustrated in FIG. 3A. FIG. 3A is a schematic flowchart of a connection establishment triggered by an LMF for user plane positioning, and the specific flow is described below.
1. The LMF determines, based on the capability of UE, a service requirement, and the like, that the user plane positioning service needs to be used.
2. The LMF transmits user plane information (such as an Internet protocol (IP) address, a fully qualified domain name (FQDN), and the like, of the LMF) used by the LMF to an AMF.
3. The AMF forwards the user plane information of the LMF to UE.
4. After receiving the user plane information of the LMF, the UE determines whether a new protocol data unit (PDU) session needs to be established to perform user plane data transmission. If the new PDU session needs to be established, the UE triggers establishment of a session by using a UE route selection policy (URSP) rule. The session is a special PDU session and is only used for transmission of positioning data between the LMF and the UE. Therefore, a special data network name (DNN)/single network slice selection assistance information (S-NSSAI) is used for establishing the session. The UE replies to the AMF with a user plane information notification response. The specific content of the user plane information notification response may be successful establishment of the session, no available session, or the like.
5. The AMF forwards the user plane information notification response to the LMF.
6. The UE establishes a secure user plane connection with the LMF through the established session.
7. After the user plane connection is successfully established, the LMF transmits a notification to the AMF, to notify that the establishment of the user plane connection is completed.
8. The AMF stores context information of the user plane connection, and the context information may specifically include: a UE identification (ID), an LMF ID, address information used by the UE and the LMF, and the like.
9. The UE and the LMF interact for user-plane positioning information.

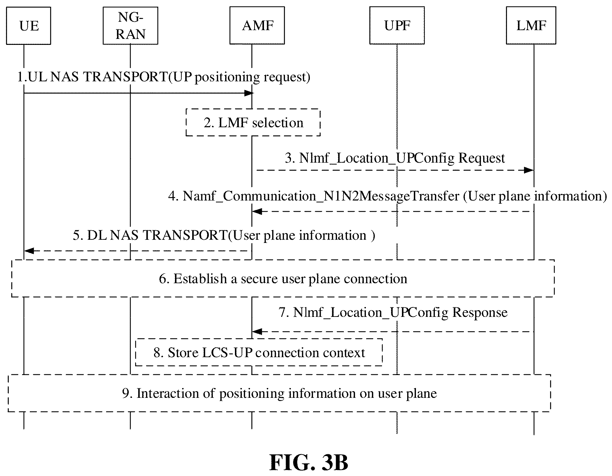

FIG. 3B is a schematic flowchart of a connection establishment triggered by UE for user plane positioning, and the specific flow is described below.
1. The UE requests the AMF to use a user plane location service.
2. The AMF selects and LMF, which is that the AMF selects, based on a position of the UE, an LMF that is close to the UE and supports user plane positioning.
3. The AMF transmits a configuration request for the user plane positioning to the LMF.
4. The LMF transmits the user plane information (such as the IP address, FQDN, or the like, of the LMF) used by the LMF to the AMF.
5. The AMF forwards the user plane information of the LMF to the UE.
6. After receiving the user plane information of the LMF, the UE determines whether a PDU session needs to be established to perform user plane data transmission. If the new PDU session needs to be established, the UE triggers establishment of a session by using a URSP rule. The session is a special PDU session and is only used for transmission of positioning data between the LMF and the UE. Therefore, a special DNN/S-NSSAI is used for establishing the session. The UE establishes a secure user plane connection with the LMF through the established session.
7. After the user plane connection is successfully established, the LMF transmits a notification to the AMF, to notify that the establishment of the user plane connection is completed.
8. The AMF stores context information of the user plane connection, and the context information may specifically include: a UE ID, an LMF ID, address information used by the UE and the LMF, and the like.
9. The UE and the LMF interact for user-plane positioning information.

The current process for establishment of a user plane connection does not consider the case that the LMF/SF is deployed locally. In this case, an uplink classifier (ULCL) for a local offloading point may be inserted or a local session may established, to transmit a data flow from the UE to the LMF/SF from an outlet of the nearest user plane function (UPF), to ensure that the path of the user plane is optimal. Otherwise, the service with delay requirements cannot meet the demand, or a large amount of data may be routed in a longer path within the network, thereby wasting the network resources.

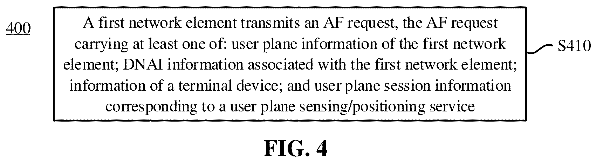

There is provided a communication method in an embodiment of the present disclosure, FIG. 4 is a schematic flowchart of a communication method 400 according to an embodiment of the present disclosure, and the method may be applied, but is not limited, to the system illustrated in FIG. 1 or FIG. 2. The method includes at least part of the following content.

At S410, a first network element transmits an AF request, the AF request carrying at least one of:
user plane information of the first network element;
DNAI information associated with the first network element;
information of a terminal device; and
user plane session information corresponding to a user plane sensing/positioning service.

The user plane session information may include a data network name (DNN)/single network slice selection assistance information (S-NSSAI).

**In** some implementations, the first network element may include a sensing function network element or a positioning function network element. For example, the sensing function network element includes an SF, and the positioning function network element includes an LMF.

**In** some implementations, the AF request may include an influencing traffic routing request.

The first network element may transmit the AF request to a unified data repository (UDR). For example, in a case of the SF/LMF determining or accepting to use the user plane sensing/positioning service, the first network element determines the user plane information of the first network element used by the user plane sensing/positioning service, and transmits the AF request to the UDR. In this way, when the UE subsequently receives the issued user plane (UP) information, triggers session establishment, or uses the existing session to transmit a data packet, insertion of the local offloading point ULCL may be triggered. In the AF request, the information of the terminal device may include UE ID information, such as a subscription permanent identifier (SUPI), a generic public subscriber identifier (GPSI), a subscription concealed identifier (SUCI), an international mobile subscriber identification number (IMSI), and the like. The AF request may be transmitted by the first network element to the UDR directly, or may be transmitted to the UDR through a network exposure function (NEF).

Alternatively, the first network element may transmit the AF request to a PCF. For example, in a case of a user plane connection being established between the first network element and the terminal device, the first network element transmits the AF request to the PCF. For example, after the SF/LMF transmits the user plane information to the UE, and the UE triggers the session establishment and connection establishment on the user plane, the SF/LMF transmits the AF request based on address information used for establishing the connection, and adjusts a routing path of the data packet of the UE. In the AF request, the information of the terminal device may include UE address information, such as at least one of: an IP address, port information, and a media access control (MAC) address of the UE.

In addition, the AF request transmitted by the first network element may further carry location information for triggering local offloading. The location information for triggering the local offloading may indicate that in response to the UE entering the location, the local offloading is started.

The specific embodiments will be described in detail below with reference to the accompanying drawings.

### First embodiment

In this embodiment, an LMF/SF transmits an AF influencing traffic routing request to a UDR.

After the LMF/SF determines that a user plane positioning/sensing service needs to be used, the LMF/SF transmits the AF request to the UDR, so that when the UE subsequently receives the issued UP information, triggers session establishment or uses a currently existing session to transmit a data packet, insertion of a ULCL for a local offloading point may be triggered.

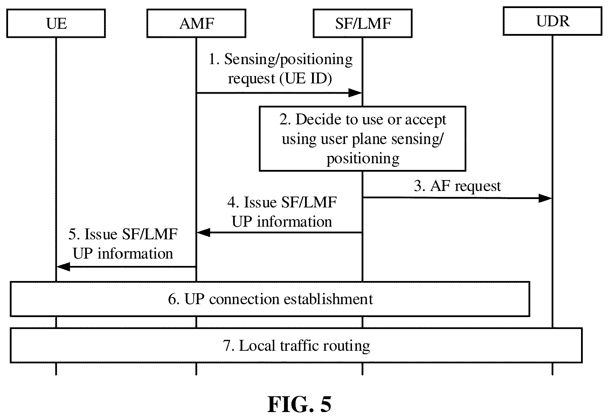

FIG. 5 is an implementation flowchart for local offloading of user plane data of UE according to an embodiment of the present disclosure. This embodiment takes the first network element being an SF/LMF as an example for description. As illustrated in FIG. 5, the process includes the following operations.

At operation 1, the SF/LMF receives a sensing/positioning request, the sensing/positioning request carrying UE ID information. The sensing/positioning request may be received from an AMF, or may also be received from another core network element, which is not limited herein.

At operation 2, the SF/LMF determines capability information of the UE based on the UE ID information, and determines or accepts to use a user plane sensing/positioning service based on the sensing/positioning request and the capability information of the UE.

At operation 3, the SF/LMF determines user plane information to be used by the user plane sensing/positioning service, and the user plane information may include user plane address information of the SF/LMF, such as an IP address, port information, fully qualified domain name (FQDN) information, etc. The SF/LMF transmits an AF request (such as AF influence traffic routing request information) to the UDR, and the AF request may include the user plane information of the SF/LMF, DNAI information associated with the SF/LMF, and the UE ID information (such as SUPI, GPSI, SUCI, IMSI, etc.). The AF request may further include specific DNN/S-NSSAI information corresponding to the user plane sensing/positioning service. The request may be transmitted by the SF/LMF to the UDR directly or may be transmitted to the UDR via an NEF.

At operation 4, the SF/LMF transmits user plane (UP) information corresponding to the SF/LMF to the AMF.

At operation 5, the AMF transmits the user plane information corresponding to the SF/LMF to the UE, and the information may be transmitted to the UE through an NAS message.

At operation 6, the UE establishes a session through the received SF/LMF related user plane information, and establishes a connection for performing a user plane communication between the UE and the SF/LMF.

At operation 7, when the UE establishes the session, a PCF may transmit a subscription request (an index of the subscription request may include the UE ID, and may further include DNN/S-NSSAI information) to the UDR. The UDR transmits a previously stored corresponding AF request to the PCF based on the subscription request. The PCF generates local offloading information based on the received AF request, and transmits the local offloading information to the SMF. After the session is established, the SMF may insert an ULCL and/or configure a local UPF based on UE location information and a data packet transmitted by the UE (a destination address of the data packet is the user plane address of the SF/LMF), to perform the local offloading (the UPF is selected based on DNAI), so that the data packet transmitted by the UE to the SF/LMF may be offloaded locally and transmitted to the SF/LMF through the local UPF.

In addition, the AF influence traffic routing request transmitted by the SF/LMF may further carry location information for triggering the local offloading. Accordingly, after the session is established, the SMF may perform the local offloading after the UE enters a location area indicated by the location information.

In the existing scheme, after the SF/LMF provides the user plane information to the UE, forwarding of the user plane data between the UE and the SF/LMF is completed through a PDU session. However, if the SF/LMF is deployed locally, a local offloading rule needs to be configured for the SF/LMF to ensure a short routing path. According to the solution of the embodiments of the present disclosure, after the SF/LMF determines that the user plane sensing/positioning service needs to be performed, through triggering and transmitting the AF influence traffic routing request, the user plane data of the specific UE is locally offloaded. Therefore, the optimal user plane path can be selected, the transmission delay can be reduced and the network resources can be saved.

### Second embodiment

In this embodiment, after a session establishment is completed, an SF/LMF initiates an AF request for local offloading based on a UE address.

The SF/LMF transmits user plane information to UE, and the UE triggers user-plane related session establishment and connection establishment. Then, the SF/LMF transmits the AF request based on address information used for establishing the connection, to achieve adjustment of a routing path of a data packet of the UE.

The specific implementation process of this embodiment is described below.

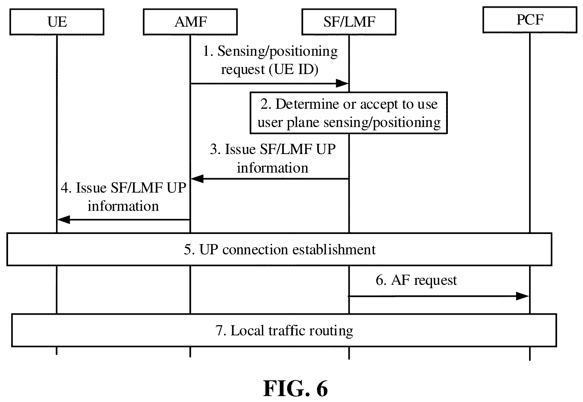

FIG. 6 is another implementation flowchart for local offloading of user plane data of UE according to an embodiment of the present disclosure. This embodiment takes the first network element being an SF/LMF as an example for description. As illustrated in FIG. 6, the process includes the following operations.

At operation 1, the SF/LMF receives a sensing/positioning request, the sensing/positioning request carrying UE ID information. The sensing/positioning request may be received from an AMF, or may also be received from another core network element, which is not limited herein.

At operation 2, the SF/LMF determines capability information of the UE based on UE ID information, and determines or accepts to use a user plane sensing/positioning service based on the sensing/positioning request and the capability information of the UE.

At operation 3, the SF/LMF determines user plane information to be used by the user plane sensing/positioning service, and the user plane information may include user plane address information of the SF/LMF, such as an IP address and port information, FQDN information, etc. The SF/LMF transmits UP information corresponding to the SF/LMF to the AMF.

At operation 4, the AMF transmits the user plane information corresponding to the SF/LMF to the UE, and the information may be transmitted to the UE through an NAS message.

At operation 5, the UE establishes a session through the received SF/LMF related user plane information, and establishes a connection for performing a user plane communication between the UE and the SF/LMF. After this operation, the SF/LMF can learn the address information used by the UE for user plane interaction with the SF/LMF.

At operation 6, the SF/LMF transmits an AF request (such as AF influence traffic routing request information) to the PCF. The AF request may include the user plane information of the SF/LMF, DNAI information associated with the SF/LMF, and the UE address information (such as SUPI, GPSI, SUCI, IMSI, etc.). The AF request may further include specific DNN/S-NSSAI information corresponding to the user plane sensing/positioning service. The request may be transmitted by the SF/LMF to the PCF directly or may be transmitted to the PCF via an NEF. Before this operation, the SF/LMF/NEF may first query PCF information corresponding to the UE address through a binding support function (BSF), and then transmit the AF request.

At operation 7, the PCF updates an SMF configuration based on the AF request, and the SMF may insert an ULCL and/or configure a local UPF based on location information of the UE and a data packet (a destination address of the data packet is the user plane address of the SF/LMF) transmitted by the UE, to perform local offloading (the UPF is selected based on DNAI), so that the data packet transmitted by the UE to the SF/LMF may be offloaded locally and transmitted to the SF/LMF through the local UPF.

In addition, the AF influence traffic routing request transmitted by the SF/LMF may further carry location information for triggering the local offloading. Accordingly, after the session is established, the SMF may perform the local offloading after the UE enters a location area indicated by the location information.

In the existing scheme, after the SF/LMF provides the user plane information to the UE, forwarding of the user plane data between the UE and the SF/LMF is completed through a PDU session. However, if the SF/LMF is deployed locally, a local offloading rule needs to be configured for the SF/LMF to ensure a short routing path. According to the solution of the embodiments of the present disclosure, after the data transmission connection is established between the SF/LMF and the UE, the user plane data of the specific UE is locally offloaded through triggering and transmitting the AF influence traffic routing request, so that an optimal user plane path can be selected, the transmission delay can be reduced and the network resources can be saved. Compared with the first embodiment, this solution optimizes the routing after the user plane connection is established, and there may be a delay, but the implementation is relatively simple.

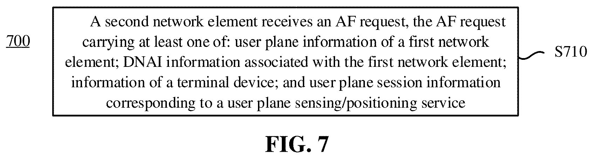

There is also provided a communication method in an embodiment of the present disclosure, and the communication method can be applied to a second network element, such as a UDR. FIG. 7 is a schematic diagram of a communication method 700 according to an embodiment of the present disclosure, and the method may be applied, but is not limited, to the system illustrated in FIG. 1 or FIG. 2. The method includes at least part of the following content.

At operation S710, a second network element receives an AF request, the AF request carrying at least one of:
user plane information of a first network element;
DNAI information associated with the first network element;
information of a terminal device; and
user plane session information corresponding to a user plane sensing/positioning service.

The user plane session information may include DNN/S-NSSAI information.

In some implementations, the first network element may include a sensing function network element or a positioning function network element. For example, the sensing function network element includes an SF, and the positioning function network element includes an LMF.

The second network element may receive the AF request from the first network element. For example, in a case of the SF/LMF determining or accepting to use the user plane sensing/positioning service, the first network element determines the user plane information of the first network element used by the user plane sensing/positioning service, and transmits the AF request to the UDR. Then the UDR receives and stores the AF request. In this way, when the UE subsequently receives the issued user plane information, triggers session establishment, or uses the existing session to transmit a data packet, insertion of an ULCL for a local offloading point may be triggered. For example, when the UE establishes the session, the UDR transmits the corresponding AF request to the PCF based on the subscription request of the PCF, so that the PCF generates the local offloading information.

In the AF request, the information of the terminal device may include UE ID information, such as SUPI, GPSI, SUCI, IMSI, or the like. The UDR may receive the AF request from the SF/LMF directly, or may receive the SF/LMF transmitted by the SF/LMF through an NEF.

In addition, the AF request received by the second network element may further carry location information for triggering local offloading. The location information for triggering the local offloading may indicate that in response to the UE entering the location, the local offloading is started.

The second network element (such as the UDR) provided in the embodiment of the present disclosure may receive and record an AF request of each first network element, and after receiving a subscription request of a PCF, may transmit the subscribed AF request to the PCF, to support local offloading of user plane data of UE, thereby saving the network resources.

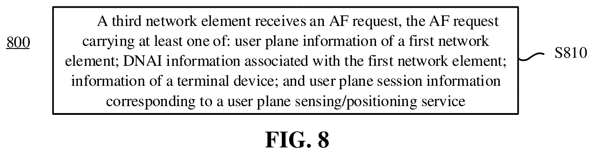

There is also provided a communication method in an embodiment of the present disclosure, and the communication method can be applied to a third network element, such as a PCF. FIG. 8 is a schematic diagram of a communication method 800 according to an embodiment of the present disclosure, and the method may be applied, but is not limited, to the system illustrated in FIG. 1 or FIG. 2. The method includes at least part of the following content.

At operation S810, a third network element receives an AF request, the AF request carrying at least one of:
user plane information of a first network element;
DNAI information associated with the first network element;
information of a terminal device; and
user plane session information corresponding to a user plane sensing/positioning service.

The user plane session information may include DNN/S-NSSAI information.

**In** some implementations, the first network element may include a sensing function network element or a positioning function network element. For example, the sensing function network element includes an SF, and the positioning function network element includes an LMF.

The PCF may receive the AF request from a UDR. For example, the PCF transmits a subscription request to the UDR and receives the AF request fed back by the UDR. In the AF request received from the UDR, the information of the terminal device may include UE ID information, such as SUPI, GPSI, SUCI, IMSI, or the like, of the terminal device.

Alternatively, the PCF may receive the AF request from the first network element. For example, after the session establishment is completed, the SF/LMF initiates the AF request based on a UE address. In the AF request received from the SF/LMF, the information of the terminal device may include address information of the terminal device, such as an IP address, port information, and an MAC address of the terminal device.

After receiving the AF request, the PCF may generate local offloading information based on the AF request, and transmit the local offloading information to the SMF, to enable the SMF to perform local offloading on the data packet transmitted by the UE.

In addition, the AF request received by the third network element may further carry location information for triggering local offloading. The location information for triggering the local offloading may indicate that in response to the UE entering the location, the local offloading is started.

The third network element (such as the PCF) provided in the embodiment of the present disclosure may receive an AF request from an SF/LMF after session establishment between UE and the SF/LMF is completed, and generate local offloading information based on the AF request, so as to realize the local offloading of user plane data of the UE, thereby saving the network resources.

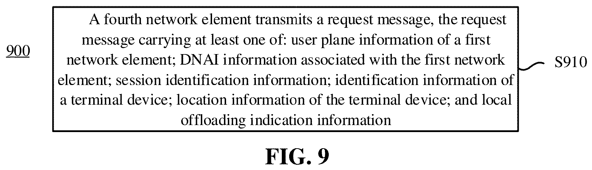

There is also provided a communication method in an embodiment of the present disclosure, and the communication method can be applied to a fourth network element, such as an AMF. FIG. 9 is a schematic diagram of a communication method 900 according to an embodiment of the present disclosure, and the method may be applied, but is not limited, to the system illustrated in FIG. 1 or FIG. 2. The method includes at least part of the following content.

At S910, a fourth network element transmits a request message, the request message carrying at least one of:
user plane information of a first network element;
DNAI information associated with the first network element;
session identification information;
identification information of a terminal device;
location information of the terminal device; and
local offloading indication information.

In some implementations, the request message may be carried in a session establishment request or a session modification request.

In some implementations, the first network element may include a sensing function network element or a positioning function network element. For example, the sensing function network element includes an SF, and the positioning function network element includes an LMF.

The fourth network element may transmit the request message to the SMF. For example, the fourth network element (such as the AMF) receives, from the first network element (such as the SF/LMF), at least one of: the user plane information of the first network element, the DNAI information associated with the first network element, and the local offloading indication information. Then, the fourth network element (such as the AMF) transmits the request message to the SMF, the request message being used for the SMF to perform the local offloading.

The specific embodiments will be described in detail below with reference to the accompanying drawings.

### Third embodiment

In the embodiment, the fourth network element is taken as an AMF as an example for description. The AMF sends a request message to an SMF, and the request message may specifically be local offloading indication information.

After receiving the user plane information transmitted by the SF/LMF, the AMF leans that a user plane sensing/positioning service needs to be performed, and in response to receiving a session request from UE or finding out an existing session of the UE for user plane sensing/positioning, the AMF transmits local offloading indication information to the SMF, to achieve the local data offloading through configuration of the SMF.

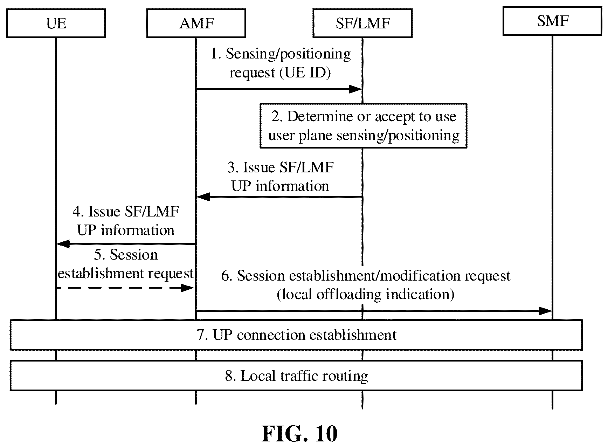

FIG. 10 is another implementation flowchart for local offloading of user plane data of UE according to an embodiment of the present disclosure. This embodiment takes the first network element being an SF/LMF and the fourth network element being an AMF as an example for description. As illustrated in FIG. 10, the process includes the following operations.

At operation 1, the SF/LMF receives a sensing/positioning request, the sensing/positioning request carrying UE ID information. The sensing/positioning request may be received from an AMF, or may also be received from another core network element, which is not limited herein.

At operation 2, the SF/LMF determines capability information of the UE based on the UE ID information, and determines to use a user plane sensing/positioning service based on the sensing/positioning request and the capability information of the UE.

At operation 3, the SF/LMF determines user plane information to be used by the user plane sensing/positioning service, and the user plane information may include user plane address information of the SF/LMF, such as an IP address and port information, FQDN information, etc. The SF/LMF transmits the user plane information corresponding to the SF/LMF to the AMF. The SF/LMF may also transmit local offloading indication information, to indicate that the session needs to be offloaded locally. Alternatively, the SF/LMF may also transmit the DNAI information associated with the SF/LMF. In some implementations, the SF/LMF may also transmit specific DNN/S-NSSAI information corresponding to the user plane sensing/positioning service. Alternatively, the SF/LMF may also transmit the UE ID information.

At operation 4, the AMF transmits the user plane information corresponding to the SF/LMF to the UE, and the information may be transmitted to the UE through an NAS message.

At operation 5, the UE triggers a session establishment request through the received SF/LMF related user plane information and a URSP rule of the UE, and transmits the session establishment request to the AMF. The session establishment request includes an indication message for user plane sensing/positioning or uses a special DNN/S-NSSAI (this slice is specific to the user plane sensing/positioning).

At operation 6, the AMF receives the session establishment request from the UE, and determines that the session is used for the user plane sensing/positioning based on the indication message of the UE or the special DNN/S-NSSAI, or the AMF determines that the UE has established the session used for the user plane sensing/positioning based on UE context information locally stored. After the AMF determines the session, the AMF transmits request information to the SMF corresponding to the session. The request message may include the user plane information of the SF/LMF and session ID information, and may further include DNAI information associated with the SF/LMF, UE ID information (such as SUPI, GPSI, SUCI, IMSI, etc.), location information of the UE, and the like. The request message may further include local offloading indication information, to indicate that the session needs to be offloaded locally.

At operation 7, the UE establishes a session through the received user plane information related to the SF/LMF, and establishes a connection for performing a user plane communication between the UE and the SF/LMF.

At operation 8, the SMF inserts an ULCL and/or configures a local UPF based on the current location information of the UE and a data packet transmitted by the UE (a destination address of the data packet is the user plane address of the SF/LMF), to perform the local offloading (the UPF is selected based on the DNAI information or local configuration of the SMF), so that the data packet transmitted by the UE to the SF/LMF may be offloaded locally and transmitted to the SF/LMF through the local UPF. If the request information transmitted by the AMF to the SMF in the operation 6 does not include the user plane information of the SF/LMF or the DNAI information associated with the SF/LMF, the user plane information of the SF/LMF and the DNAI information associated with the SF/LMF may be locally configured on the SMF. The SMF may select a UPF based on the local configuration and configure the UPF, to locally offload and transmit the data packet transmitted by the UE to the SMF/LMF.

In the existing scheme, after the SF/LMF provides the user plane information to the UE, forwarding of the user plane data between the UE and the SF/LMF is completed through the PDU session. However, if the SF/LMF is deployed locally, a local offloading rule needs to be configured for the SF/LMF to ensure a short routing path. According to the solution of the embodiments of the present disclosure, after the AMF determines that the user plane sensing/positioning service needs to be performed, a session for specific UE may be adjusted through triggering and transmitting a request message to the SMF, so that the user plane data of the UE is locally offloaded.

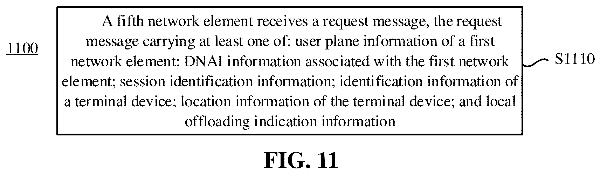

There is also provided a communication method in an embodiment of the present disclosure, and the communication method can be applied to a fifth network element, such as an SMF. FIG. 11 is a schematic diagram of a communication method 1100 according to an embodiment of the present disclosure, and the method may be applied, but is not limited, to the system illustrated in FIG. 1 or FIG. 2. The method includes at least part of the following content.

At S1110, a fifth network element receives a request message, the request message carrying at least one of:
user plane information of a first network element;
DNAI information associated with the first network element;
session identification information;
identification information of a terminal device;
location information of the terminal device; and
local offloading indication information.

In some implementations, the request message may be carried in a session establishment request or a session modification request.

In some implementations, the first network element may include a sensing function network element or a positioning function network element. For example, the sensing function network element includes an SF, and the positioning function network element includes an LMF.

The fifth network element, after receiving a data packet from the terminal device, may perform local offloading based on the request message.

For example, the SMF may perform the local offloading based on the DNAI information associated with the SF/LMF.

Alternatively, the SMF may perform, based on the local offloading indication information, the local offloading by using a local configuration.

The plurality of embodiments of the present disclosure are not independent of each other, and can be combined with each other, and the implementations in different embodiments may be reasonably combined, which will not be listed herein.

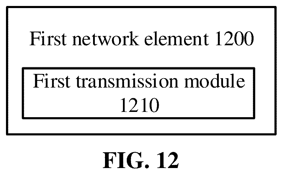

There is also provided a first network element in an embodiment of the present disclosure. FIG. 12 is a schematic structural diagram of the first network element 1200 according to an embodiment of the present disclosure. The first network element 1200 includes a first transmission module 1210.

The first transmission module 1210 is configured to transmit an AF request, the AF request carrying at least one of:
user plane information of the first network element;
DNAI information associated with the first network element;
information of a terminal device; and
user plane session information corresponding to a user plane sensing/positioning service.

In some implementations, the user plane session information may include DNN/S-NSSAI information.

In some implementations, the first transmission module 1210 is configured to transmit the AF request to a UDR.

In some implementations, the first transmission module 1210 is configured to, in response to the first network element determining or accepting to use the user plane sensing/positioning service, determine the user plane information of the first network element used by the user plane sensing/positioning service, and transmit the AF request to the UDR.

In some implementations, the information of the terminal device may include ID information of the terminal device.

In some implementations, the ID information of the terminal device may include an SUPI, a GPSI, an SUCI, or an IMSI of the terminal device.

In some implementations, the first transmission module 1210 is configured to transmit the AF request to a PCF.

In some implementations, the first transmission module 1210 is configured to, in a case of a user plane connection being established between the first network element and the terminal device, transmit the AF request to the PCF.

In some implementations, the information of the terminal device may include address information of the terminal device.

In some implementations, the address information of the terminal device may include at least one of: an IP address, port information, and an MAC address of the terminal device.

In some implementations, the AF request may further carry location information for triggering local offloading.

In some implementations, the first network element may include a sensing function network element or a positioning function network element.

It should be understood that the above and other operations and/or functions of the module in the first network element is used for performing the corresponding flows of the first network element in the method 400 as illustrated in FIG. 4, details will not be elaborated herein again for the sake of brevity.

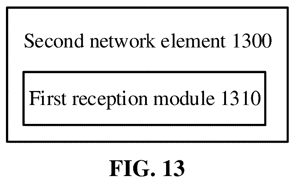

There is also provided a second network element in an embodiment of the present disclosure. FIG. 13 is a schematic structural diagram of a second network element 1300 according to an embodiment of the present disclosure. The second network element 1300 includes a first reception module 1310.

The first reception module 1310 is configured to receive an AF request, the AF request carrying at least one of:
user plane information of a first network element;
DNAI information associated with the first network element;
information of a terminal device; and
user plane session information corresponding to a user plane sensing/positioning service.

In some implementations, the user plane session information may include DNN/S-NSSAI information.

In some implementations, the AF request may further carry location information for triggering local offloading.

In some implementations, the information of the terminal device may include ID information of the terminal device.

In some implementations, the ID information of the terminal device may include an SUPI, a GPSI, an SUCI, or an IMSI of the terminal device.

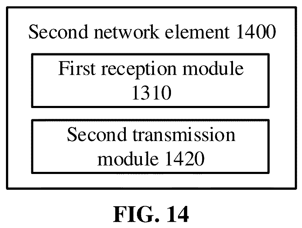

FIG. 14 is a schematic structural diagram of a second network element 1400 according to an embodiment of the present disclosure. The second network element 1400 includes one or more features of the embodiment of the second network element 1300 described above. In a possible implementation, the second network element may further include a second transmission module 1420.

The second transmission module 1420 is configured to transmit an AF request to a PCF based on a subscription request of the PCF.

In some implementations, the AF request is used for the PCF to generate local offloading information.

In some implementations, the first network element may include a sensing function network element or a positioning function network element.

In some embodiments, the second network element may include a UDR.

It should be understood that the above and other operations and/or functions of the module in the second network element is used for performing the corresponding flows of the second network element in the method 700 as illustrated in FIG. 7, details will not be elaborated herein again for the sake of brevity.

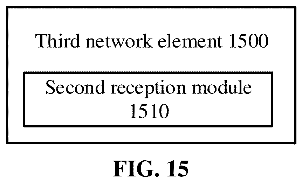

There is also provided a third network element in an embodiment of the present disclosure. FIG. 15 is a schematic structural diagram of a third network element 1500 according to an embodiment of the present disclosure. The third network element 1500 includes a second reception module 1510.

The second reception module 1510 is configured to receive an AF request, the AF request carrying at least one of:
user plane information of a first network element;
DNAI information associated with the first network element;
information of a terminal device; and
user plane session information corresponding to a user plane sensing/positioning service.

In some implementations, the user plane session information may include DNN/S-NSSAI information.

In some implementations, the AF request may further carry location information for triggering local offloading.

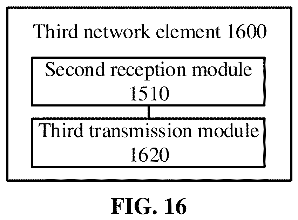

FIG. 16 is a schematic structural diagram of a third network element 1600 according to an embodiment of the present disclosure. The third network element 1600 includes one or more features of the embodiment of the third network element 1500 described above. In a possible implementation, the third network element 1600 may further include a third transmission module 1620.

The third transmission module 1620 is configured to generate local offloading information based on an AF request, and transmit the local offloading information to an SMF.

In some implementations, the first network element may include a sensing function network element or a positioning function network element.

In some implementations, the third network element may include a PCF.

It should be understood that the above and other operations and/or functions of the module in the third network element is used for performing the corresponding flows of the third network element in the method 800 as illustrated in FIG. 8, details will not be elaborated herein again for the sake of brevity.

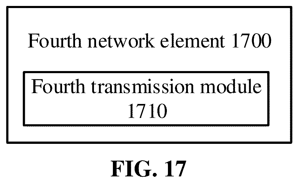

There is also provided a fourth network element in an embodiment of the present disclosure. FIG. 17 is a schematic structural diagram of a fourth network element 1700 according to an embodiment of the present disclosure. The fourth network element 1700 includes a fourth transmission module 1710.

The fourth transmission module 1710 is configured to transmit a request message, the request message carrying at least one of:
user plane information of a first network element;
DNAI information associated with the first network element;
session identification information;
identification information of a terminal device;
location information of the terminal device; and
local offloading indication information.

In some implementations, the request message may be carried in a session establishment request or a session modification request.

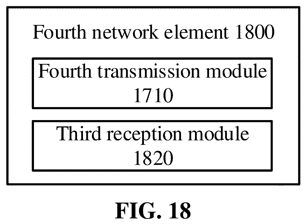

FIG. 18 is a schematic structural diagram of a fourth network element 1800 according to an embodiment of the present disclosure. The fourth network element 1800 includes one or more features of the embodiment of the fourth network element 1700 described above. In a possible implementation, in the embodiment of the present disclosure, before the fourth transmission module 1710, the fourth network element 1800 may further include a third reception module 1820.

The third reception module 1820 is configured to receive, from the first network element, at least one of: the user plane information of the first network element, the DNAI information associated with the first network element, and the local offloading indication information.

In some implementations, the fourth transmission module 1710 is configured to transmit the request message to the SMF.

In some implementations, the request message is used for the SMF to perform local offloading.

In some implementations, the fourth network element may include an AMF.

In some implementations, the first network element may include a sensing function network element or a positioning function network element.

It should be understood that the above and other operations and/or functions of the module in the fourth network element is used for performing the corresponding flows of the fourth network element in the method 900 as illustrated in FIG. 9, details will not be elaborated herein again for the sake of brevity.

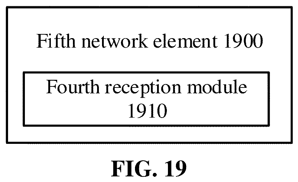

There is also provided a fifth network element in an embodiment of the present disclosure. FIG. 19 is a schematic structural diagram of a fifth network element 1900 according to an embodiment of the present disclosure. The fifth network element 1900 includes a fourth reception module 1910.

The fourth reception module 1910 is configured to receive a request message, the request message carrying at least one of:
user plane information of a first network element;
DNAI information associated with the first network element;
session identification information;
identification information of a terminal device;
location information of the terminal device; and
local offloading indication information.

In some implementations, the request message may be carried in a session establishment request or a session modification request.

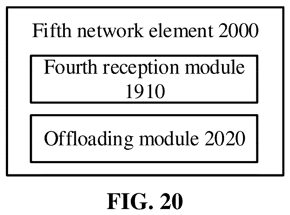

FIG. 20 is a schematic structural diagram of a fifth network element 2000 according to an embodiment of the present disclosure. The fifth network element 2000 includes one or more features of the embodiment of the fifth network element 1900 described above. In a possible implementation, the fifth network element 2000 may further include an offloading module 2020.

The offloading module 2020 is configured to, after receiving a data packet from the terminal device, perform local offloading based on the request message.

In some implementations, the offloading module 2020 is configured to:
perform the local offloading based on the DNAI information associated with the first network element; or
perform, based on the local offloading indication information, the local offloading by using a local configuration.

In some implementations, the fifth network element may include an SMF.

In some implementations, the first network element may include a sensing function network element or a positioning function network element.

It should be understood that the above and other operations and/or functions of the module in the fifth network element is used for performing the corresponding flows of the fifth network element in the method 1100 as illustrated in FIG. 11, details will not be elaborated herein again for the sake of brevity.

The functions described with respect to various modules (sub-modules, units, components, etc.) in the communication devices of the embodiments of the present disclosure may be implemented by different modules (sub-modules, units, components, etc.), or may be implemented by a same module (sub-module, unit, component, etc.). For example, the first reception module and the second reception module may be different modules or the same module, both of which can implement the corresponding functions in the embodiments of the present disclosure. In addition, the transmission module and the reception module in the embodiments of the present disclosure may be implemented by a transceiver of the device, and some or all of the remaining modules may be implemented by a processor of the device.

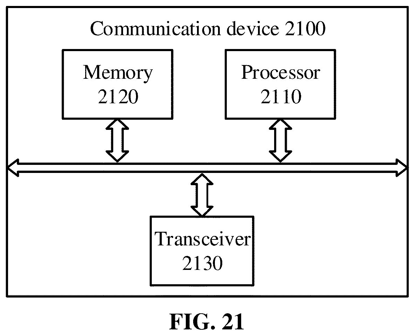

FIG. 21 is a schematic structural diagram of a communication device 2100 according to an embodiment of the present disclosure. The communication device 2100 illustrated in FIG. 21 includes a processor 2110. The processor 2110 may be configured to call a computer program stored in a memory and run the computer program to perform the methods according to the embodiments of the disclosure.

In some implementations, as illustrated in FIG. 21, the communication device 2100 may further include a memory 2120. The processor 2110 may be configured to call the computer program stored in the memory 2120 and run the computer program to perform the communication methods according to the embodiments of the disclosure.

The memory 2120 may be a separate device independent from the processor 2110, or may be integrated into the processor 2110.

In some implementations, as illustrated in FIG. 21, the communication device 2100 may further include a transceiver 2130. The processor 2110 may control the transceiver 2130 to communicate with other devices, specifically, to send information or data to other devices, or receive information or data from other devices.

The transceiver 2130 may include a transmitter and a receiver. The transceiver 2130 may further include an antenna, and there may be one or more antennas.

In some implementations, the communication device 2100 may be a communication device in the embodiments of the present disclosure. The communication device 2100 may carry out corresponding flows that are implemented by the communication devices in various methods of the embodiments of the disclosure. For brevity, details are not elaborated herein again.

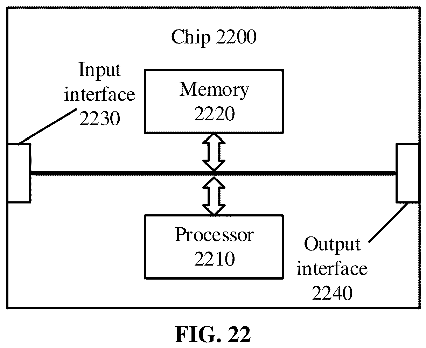

FIG. 22 is a schematic structural diagram of a chip 2200 according to an embodiment of the present disclosure. The chip 2200 illustrated in FIG. 22 includes a processor 2210. The processor 2210 may be configured to call a computer program stored in a memory and run the computer program to implement the methods according to the embodiments of the present disclosure.

In some implementations, as illustrated in FIG. 22, the chip 2200 may further include a memory 2220. The processor 2210 may be configured to call the computer program stored in the memory 2220 and run the computer program to implement the methods according to the embodiments of the disclosure.

The memory 2220 may be a separate device independent from the processor 2210, or may be integrated into the processor 2210.

In some implementations, the chip 2200 may further include an input interface 2230. The processor 2210 may control the input interface 2230 to communicate with other devices or chips, specifically, to obtain information or data from other devices or chips.

In some implementations, the chip 2200 may further include an output interface 2240. The processor 2210 may control the output interface 2240 to communicate with other devices or chips, specifically, to output information or data to other devices or chips.

In some implementations, the chip may be applied in the communication device in the embodiments of the present disclosure. The chip may implement corresponding flows that are carried out by the network device in various methods in the embodiments of the present disclosure. For brevity, details are not elaborated herein again.

It should be understood that, the chip mentioned in the embodiments of the present disclosure may also be referred to as a system-level chip, a system chip, a chip system or a chip of a system on chip, etc.

The foregoing processor may be a general-purpose processor, a digital signal processor (DSP), a field programmable gate array (FPGA), an application specific integrated circuit (ASIC), or another programmable logical device, transistor logical device, or discrete hardware component. The general-purpose processor mentioned above may be a microprocessor or any conventional processor and the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that, the foregoing memory is exemplary but not for limitation. For example, the memory in the embodiments of the present disclosure may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), etc. It should be noted that, the memory in the embodiments of the present disclosure aims to include but not be limited to these memories and any other suitable types of memories.

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with embodiments of the present disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. For example, the computer instructions may be transmitted from a Web site, a computer, a server, or a data center to another Web site, computer, server, or data center through a wired (e.g. a coaxial cable, an optical fiber, a digital subscriber line (DSL)) or wireless (e.g. infrared, wireless, microwave, etc.) form. The computer-readable storage medium may be any available medium accessible to a computer or a data storage device such as a server, a data center, or the like that integrated with one or more available mediums. The available medium may be a magnetic medium (e.g. a floppy disk, a hard disk, a magnetic tape), an optical medium (e.g. a digital versatile disc (DVD)), or a semiconductor medium (e.g. a solid state disk (SSD)), etc.

It should be understood that in various embodiments of the present disclosure, the size of the sequence number of the above-mentioned processes does not mean the execution order, and the execution order of various processes are determined by their function and inherent logics, and should not be limited in any way to the implementation process of the embodiments of the present disclosure.

It may be clearly understood by those skilled in the art that, for the purpose of convenient and brief description, the detailed working process of the foregoing systems, apparatuses, and units may refer to the corresponding processes in the foregoing method embodiments, and details are not elaborated herein again.

The foregoing descriptions are merely specific implementations of the present disclosure, but are not intended to limit the scope of protection of the present disclosure. Any variation or replacement readily figured out by a person skilled in the art within the technical scope disclosed in the present disclosure shall fall within the scope of protection of the present disclosure. Therefore, the scope of protection of the present disclosure shall be subject to the scope of protection of the claims.

## Claims

1. A communication method, comprising:
transmitting, by a first network element, an application function (AF) request, the AF request carrying at least one of:
user plane information of the first network element;
data network access identifier (DNAI) information associated with the first network element;
information of a terminal device; and
user plane session information corresponding to a user plane sensing/positioning service.

2. The method of claim 1, wherein the user plane session information comprises a data network name (DNN)/single network slice selection assistance information (S-NSSAI).

3. The method of claim 1 or 2, wherein transmitting, by the first network element, the AF request comprises:
transmitting, by the first network element, the AF request to a unified data repository (UDR).

4. The method of claim 3, wherein transmitting, by the first network element, the AF request to the UDR comprises:
in a case of the first network element determining or accepting to use the user plane sensing/positioning service, determining, by the first network element, the user plane information of the first network element used by the user plane sensing/positioning service, and transmitting the AF request to the UDR.

5. The method of claim 3 or 4, wherein the information of the terminal device comprises identification information of the terminal device.

6. The method of claim 5, wherein the identification information of the terminal device comprises: a subscription permanent identifier (SUPI), a generic public subscription identifier (GPSI), a subscription concealed identifier (SUCI), or an international mobile subscriber identification number (IMSI) of the terminal device.

7. The method of claim 1 or 2, wherein transmitting, by the first network element, the AF request comprises:
transmitting, by the first network element, the AF request to a policy control function (PCF).

8. The method of claim 7, wherein transmitting, by the first network element, the AF request to the PCF comprises:
in a case of a user plane connection being established between the first network element and the terminal device, transmitting, by the first network element, the AF request to the PCF.

9. The method of claim 8, wherein the information of the terminal device comprises address information of the terminal device.

10. The method of claim 9, wherein the address information of the terminal device comprises at least one of: an Internet protocol (IP) address, port information, and a media access control (MAC) address of the terminal device.

11. The method of any one of claims 1 to 10, wherein the AF request further carries location information for triggering local offloading.

12. The method of any one of claims 1 to 11, wherein the first network element comprises a sensing function network element or a positioning function network element.

13. A communication method, comprising:
receiving, by a second network element, an application function (AF) request, the AF request carrying at least one of:
user plane information of a first network element;
data network access identifier (DNAI) information associated with the first network element;
information of a terminal device; and
user plane session information corresponding to a user plane sensing/positioning service.

14. The method of claim 13, wherein the user plane session information comprises a data network name (DNN)/single network slice selection assistance information (S-NSSAI).

15. The method of claim 13 or 14, wherein the AF request further carries location information for triggering local offloading.

16. The method of any one of claims 13 to 15, wherein the information of the terminal device comprises identification information of the terminal device.

17. The method of claim 16, wherein the identification information of the terminal device comprises: a subscription permanent identifier (SUPI), a generic public subscription identifier (GPSI), a subscription concealed identifier (SUCI), or an international mobile subscriber identification number (IMSI) of the terminal device.

18. The method of any one of claims 13 to 17, further comprising:
transmitting, by a unified data repository (UDR), the AF request to a policy control function (PCF) based on a subscription request from the PCF.

19. The method of claim 18, wherein the AF request is used for the PCF to generate local offloading information.

20. The method of any one of claims 13 to 19, wherein the first network element comprises a sensing function network element or a positioning function network element.

21. The method of any one of claims 13 to 19, wherein the second network element comprises a unified data repository (UDR).

22. A communication method, comprising:
receiving, by a third network element, an application function (AF) request, the AF request carrying at least one of:
user plane information of a first network element;
data network access identifier (DNAI) information associated with the first network element;
information of a terminal device; and
user plane session information corresponding to a user plane sensing/positioning service.

23. The method of claim 22, wherein the user plane session information comprises a data network name (DNN)/single network slice selection assistance information (S-NSSAI).

24. The method of claim 22 or 23, wherein the AF request further carries location information for triggering local offloading.

25. The method of any one of claims 22 to 24, further comprising:
generating, by the third network element, local offloading information based on the AF request, and transmitting the local offloading information to a session management function (SMF).

26. The method of any one of claims 22 to 25, wherein the first network element comprises a sensing function network element or a positioning function network element.

27. The method of any one of claims 22 to 25, wherein the third network element comprises a policy control function (PCF).

28. A communication method, comprising:
transmitting, by a fourth network element, a request message, the request message carrying at least one of:
user plane information of a first network element;
data network access identifier (DNAI) information associated with the first network element;
session identification information;
identification information of a terminal device;
location information of the terminal device; and
local offloading indication information.

29. The method of claim 28, wherein the request message is carried in a session establishment request or a session modification request.

30. The method of claim 28 or 29, wherein before transmitting, by the fourth network element, the request message, the method further comprises:
receiving, by the fourth network element from the first network element, at least one of:
the user plane information of the first network element, the DNAI information associated with
the first network element, and the local offloading indication information.

31. The method of any one of claims 28 to 30, wherein transmitting, by the fourth network element, the request message comprises:
transmitting, by the fourth network element, the request message to a session management function (SMF).

32. The method of claim 31, wherein the request message is used for the SMF to perform local offloading.

33. The method of any one of claims 28 to 32, wherein the fourth network element comprises an access and mobility management function (AMF).

34. The method of any one of claims 28 to 33, wherein the first network element comprises a sensing function network element or a positioning function network element.

35. A communication method, comprising:
receiving, by a fifth network element, a request message, the request message carrying at least one of:
user plane information of a first network element;
data network access identifier (DNAI) information associated with the first network element;
session identification information;
identification information of a terminal device;
location information of the terminal device; and
local offloading indication information.

36. The method of claim 35, wherein the request message is carried in a session establishment request or a session modification request.

37. The method of claim 35 or 36, further comprising:
performing, by the fifth network element, local offloading based on the request message after receiving a data packet from the terminal device.

38. The method of claim 35 or 36, wherein performing, by the fifth network element, the local offloading comprises:
performing the local offloading based on the DNAI information associated with the first network element; or
performing, based on the local offloading indication information, the local offloading by using a local configuration.

39. The method of any one of claims 35 to 38, wherein the fifth network element comprises a session management function (SMF).

40. The method of any one of claims 35 to 39, wherein the first network element comprises a sensing function network element or a positioning function network element.

41. A first network element, comprising:
a first transmission module, configured to transmit an application function (AF) request, the AF request carrying at least one of:
user plane information of the first network element;
data network access identifier (DNAI) information associated with the first network element;
information of a terminal device; and
user plane session information corresponding to a user plane sensing/positioning service.

42. A second network element, comprising:
a first reception module, configured to receive an application function (AF) request, the AF request carrying at least one of:
user plane information of a first network element;
data network access identifier (DNAI) information associated with the first network element;
information of a terminal device; and
user plane session information corresponding to a user plane sensing/positioning service.

43. A third network element, comprising:
a second reception module, configured to receive an application function (AF) request, the AF request carrying at least one of:
user plane information of a first network element;
data network access identifier (DNAI) information associated with the first network element;
information of a terminal device; and
user plane session information corresponding to a user plane sensing/positioning service.

44. A fourth network element, comprising:
a fourth transmission module, configured to transmit a request message, the request message carrying at least one of:
user plane information of a first network element;
data network access identifier (DNAI) information associated with the first network element;
session identification information;
identification information of a terminal device;
location information of the terminal device; and
local offloading indication information.

45. A fifth network element, comprising:
a fourth reception module, configured to receive a request message, the request message carrying at least one of:
user plane information of a first network element;
data network access identifier (DNAI) information associated with the first network element;
session identification information;
identification information of a terminal device;
location information of the terminal device; and
local offloading indication information.

46. A communication device, comprising a processor, a memory and a transceiver, wherein the memory is for storing a computer program, the processor is configured to call and run the computer program stored in the memory and control the transceiver to perform the method according to any one of claims 1 to 12, or the method according to any one of claims 13 to 21, or the method according to any one of claims 22 to 27, or the method according to any one of claims 28 to 34, or the method according to any one of claims 35 to 40.

47. A chip, comprising a processor configured to call and run a computer program stored in a memory to cause a device mounted with the chip to perform the method according to any one of claims 1 to 12, or the method according to any one of claims 13 to 21, or the method according to any one of claims 22 to 27, or the method according to any one of claims 28 to 34, or the method according to any one of claims 35 to 40.

48. A computer-readable storage medium, having stored thereon a computer program, wherein the computer program is run by a computer to perform the method according to any one of claims 1 to 12, or the method according to any one of claims 13 to 21, or the method according to any one of claims 22 to 27, or the method according to any one of claims 28 to 34, or the method according to any one of claims 35 to 40.

49. A computer program product, comprising computer program instructions, wherein the computer program instructions are run by a computer to perform the method according to any one of claims 1 to 12, or the method according to any one of claims 13 to 21, or the method according to any one of claims 22 to 27, or the method according to any one of claims 28 to 34, or the method according to any one of claims 35 to 40.

50. A computer program, causing a computer to perform the method according to any one of claims 1 to 12, or the method according to any one of claims 13 to 21, or the method according to any one of claims 22 to 27, or the method according to any one of claims 28 to 34, or the method according to any one of claims 35 to 40.
